# EUROPÄISCHE PATENTSCHRIFT

(11) **EP 1 917 721 B1**
(45) Veröffentlichungstag und Bekanntmachung des Hinweises auf die Patenterteilung: **03.08.2016**
(21) Anmeldenummer: 06791578.5
(22) Anmeldetag: 15.08.2006
(51) Int. Cl.: H04B 1/08, B60R 16/03, G11B 31/00

(54) **HYBRIDEMPFÄNGER MIT ADAPTIVEM FRONT- UND BACKEND**
HYBRID RECEIVER PROVIDED WITH ADAPTIVE FRONT AND BACK TERMINALS
RÉCEPTEUR HYBRIDE AVEC UNITÉS FRONTALE ET DORSALE ADAPTATIVES

(30) Priorität: 16.08.2005 DE 102005038944
(43) Veröffentlichungstag der Anmeldung: 07.05.2008
(73) Patentinhaber: Hirschmann Car Communication GmbH, 72654 Neckartenzlingen (DE)
(72) Erfinder: ADAM, Thomas, 72574 Bad Urach (DE); SAUTTER, Wolfgang, 72770 Reutlingen (DE); SCHWARZ, Christian, 72658 Bempflingen (DE); THOMAS, Robert, 72649 Wolfschlugen (DE)
(74) Vertreter: Greif, Thomas
(86) Internationale Anmeldenummer: PCT/EP2006/008045
(87) Internationale Veröffentlichungsnummer: WO 2007/020055

(56) Entgegenhaltungen:
- US-A1- 2003 215 102
- US-B1- 6 189 057
- US-B1- 6 396 164

## Beschreibung

Die Erfindung betrifft eine Empfangseinrichtung zum mobilen Empfang von hochfrequenten Signalen (HF-Signale) verschiedener Dienste in Fahrzeugen.

Heutzutage werden in unterschiedlichen Ländern der Welt verschiedene analoge und digitale TV-Standards verwendet. Ein Beispiel hierfür ist der im europäischen Raum bekannte digital terrestrische Dienst DVB-T und der im japanischen verwendete digital terrestrische Standard ISDB-T. Weitere Standards wie z.B. DMB-T, DVB-H oder ATSC bestehen bereits oder sind noch im Aufbau der Infrastruktur. Diese verschiedenen Standards erfordern ein flexibles Konzept beim Empfang und bei der Anbindung an die in einem Fahrzeug vorhandenen Kommunikationsstrukturen.

Nach heutigem Stand verwenden die meisten der Automobilhersteller einen oder mehrere der weitestgehend standardisierten Busse wie z.B. IEE1394, CAN oder MOST für die Steuerung von Multimediageräten. Dennoch verwendet jeder Automobilhersteller auch eigene proprietäre Funktionen auf dem Bus. Dies erfordert sehr oft auch die Anpassung der Kommunikationseinheiten in Hard- und Software an die Vorgaben des Automobilherstellers.

Der Erfindung liegt die Aufgabe zugrunde, eine Empfangseinrichtung zum mobilen Empfang von hochfrequenten Signalen verschiedener Dienste in Fahrzeugen bereitzustellen, die den Entwicklungsaufwand verringert und mit der eine Anpassung neuer Dienste an bestehende Kommunikationsstrukturen im Fahrzeug oder umgekehrt einfach ermöglicht werden kann.

Diese Aufgabe ist durch die Merkmale des Patentanspruchs 1 gelöst.

Erfindungsgemäss ist vorgesehen, dass die Empfangseinrichtung zumindest eine Empfangseinheit zum Empfangen und Verarbeiten landesspezifischer Dienste sowie eine Kommunikationseinheit zum Anschluss der Empfangseinrichtung an einen Kommunikationsbus des Fahrzeuges aufweist, wobei die Empfangseinheit und die Kommunikationseinheit austauschbar zur Signalübertragung miteinander verbunden sind. Damit wird in vorteilhafter Weise die Empfangseinrichtung in zwei voneinander getrennte Einheiten aufgeteilt, die untereinander miteinander kommunizieren und die jeweils auf ihre Funktion hin entwickelt und optimiert werden können. Bleibt beispielsweise der Kommunikationsbus und dessen Topologie unverändert, sollen aber neue landesspezifische Dienste (wie zum Beispiel Hörfunk- oder Fernsehprogramme) verarbeit werden können, ist es nur erforderlich, die zugehörige Empfangseinheit entsprechend neu zu entwickeln bzw. anzupassen, wohingegen die Kommunikationseinheit unverändert bleiben kann. Umgekehrt bedeutet dies, dass dann, wenn die zu empfangenden und zu verarbeitenden landesspezifischen Dienste unverändert bleiben, es im Fahrzeug aber eine neue Topologie für den Kommunikationsbus gibt, nur die Kommunikationseinheit an die neue Topologie angepasst werden kann, während die Verbindung (Schnittstelle) zu der zugehörigen Empfangseinheit unverändert bleiben kann.

Die Idee, die dieser Tatsache zugrunde liegt, ist also die Aufteilung zukünftiger Generationen an Empfängern in zwei Bereiche. Einmal in eine Anbindung an kundenspezifische Kommunikationsstrukturen und zum anderen an die in einem jeweiligen Land zur Verfügung gestellten TV- und Radiodienste ausgerichtete Empfangseinheit. Heutige bekannte Konzepte sind bisher nicht auf diese Tatsache ausgerichtet. Die Entwicklung eines neuen Empfängers für einen bestimmten Standard in einem bestimmten Land bedeutet auch gleichzeitig die nochmalige Entwicklung und Integration in die Fahrzeuge der Automobilindustrie mit allen wirtschaftlichen Nachteilen, die sich dadurch ergeben.

Die Empfangseinheit wird nun im weiteren Verlauf als Frontend und die Kommunikationseinheit als Backend bezeichnet.

In Weiterbildung der Erfindung weist die Kommunikationseinheit Mittel auf und diese Mittel sind dazu ausgebildet, die Topologie der Kommunikationseinheit an die Topologie des Kommunikationsbusses des Fahrzeuges anzupassen. Dadurch wird die Kommunikation zwischen der gesamten Empfangseinrichtung und dem Kommunikationsbus des Fahrzeuges über diese Kommunikationseinheit abgewickelt, wobei die zumindest eine Empfangseinheit zum Empfangen und Verarbeiten landesspezifischer Dienste davon unberührt bleibt. Das bedeutet, dass bei Änderungen an der Topologie des Kommunikationsbusses des Fahrzeuges nur die entsprechenden Mittel (Hard- und/oder Software) der Kommunikationseinheit an diese neue Topologie des Kommunikationsbusses angepasst werden müssen. Dies vereinfacht und beschleunigt die Neuentwicklung einer Empfangseinrichtung und senkt zudem die Kosten, da lediglich die Mittel bzw. die Funktion der Mittel der Kommunikationseinheit an die neue Topologie des Kommunikationsbusses angepasst werden müssen.

Das Frontend ist dadurch gekennzeichnet, dass es eine oder mehrere Empfangseinheiten für einen oder mehrere analoge und oder digitale Standards besitzt. Für einen digitalen Dienst DVB-T sind dies z.B. die Tuner, die Demodulatoren und der zugehörige MPEG-Dekoder. Applikationsspezifische Diagnosejobs werden ebenfalls weitestgehend auf dem Frontend bearbeitet.

Das Backend ist dadurch gekennzeichnet, dass es die spezifischen Kommunikationseinheiten für die kundenspezifischen Bustopologien besitzt (z.B. IEE1394, MOST und/oder CAN). Auf dem Backend befindet sich ebenfalls das Netzteil mit dem Anschluss an die Versorgungsspannung des Fahrzeugs. Weiterhin übernimmt das Backend weitestgehend die vom Empfangsstandard unabhängigen aber notwendigen Diagnosejobs.

Die Aufteilung in Backend und Frontend erfolgt physikalisch durch zwei getrennte Leiterplatten, die über definierte Schnittstellen verbunden sind. Durch geschickte Bereitstellung von Schnittstellen auf dem Backend und Frontend, können diverse verschiedene Fontends mit unterschiedlichen Empfangsstandards an das Backend angeschlossen werden. Dies verdeutlicht das mögliche Einsparpotenzial für die Automobilindustrie. Es werden nur noch applikationsspezifische Frontends für neue Dienste entwickelt. Das Backend wird nur einmal pro Automobilhersteller und pro verwendeter Busarchitektur entwickelt. Die Wiederverwendung von Hard- und Software beschleunigt die Entwicklung für Empfänger von neuen Standards deutlich. Weiterhin ist eine deutlich steigende Qualität, für die Entwicklung zukünftiger Frontends durch die Wiederverwendung von bereits geprüfter und getesteter Hard- und Software zu erwarten.

Die Entwicklung der Backends ist dabei so gestaltet, dass abhängig vom eingesetzten Frontend und Kommunikations-Standard eine Bestückvariante zur Kostenoptimierung eingesetzt werden kann.

Ausführungsbeispiele der Erfindung, auf die diese jedoch nicht beschränkt ist, sind im Folgenden beschrieben und anhand der beiden Figuren näher erläutert.

In den beiden Figuren ist grundsätzlich die Aufteilung der gesamten Empfangseinrichtung mit einem oder mehrerer Empfangszüge in die zumindest eine Empfangseinheit (Frontend) und die Kommunikationseinheit (Backend) dargestellt. Das Frontend zeigt in an sich bekannter Weise Antennen, die einem oder mehrerer Empfangsmodule zugeschaltet sind, wobei mit dem zumindest einen Empfangsmodul die landesspezifischen Dienste (wie zum Beispiel ISDB-T) empfangen werden können. Das bedeutet allgemein, dass das Frontend einen oder mehrere Empfangszüge mit Tunern, Demodulatoren, ggf. MPEG-Decodern und dergleichen aufweist. Physikalisch hiervon getrennt ist das Backend mit seinen jeweiligen Elementen bzw. Bausteinen, die, genauso wie die Elemente und Bausteine des Frontend, auf einer eigenständigen Leiterplatte angeordnet sind. Die Signalübertragung vom Frontend zum Backend (und ggf. auch umgekehrt soweit erforderlich) erfolgt über eine entsprechend ausgestaltete Schnittstelle, über die dann digitale und/oder analoge Rundfunk-, Fernseh-, Video- bzw. Audiosignale übertragen werden können, genauso wie Kontrollsignale, Diagnosesignale und Stromversorgungen. Hierzu weist insbesondere das Backend ein Netzteil zur eigenen Stromversorgung und auch zur Stromversorgung des Frontend auf.

Alternativ kann das Netzteil auch in dem Frontend enthalten sein, wobei das jeweilige Netzteil aus der Spannungsversorgung des Fahrzeuges versorgt wird.

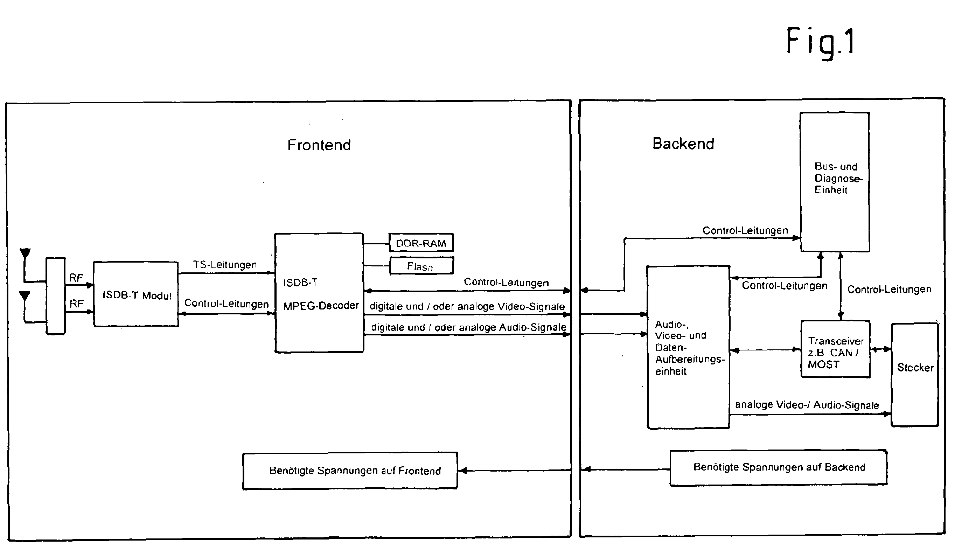

In der Figur 1 ist ein Blockschaltbild mit einem Frontend und einem Backend für den Einsatz in ISDB-T Gebieten dargestellt.

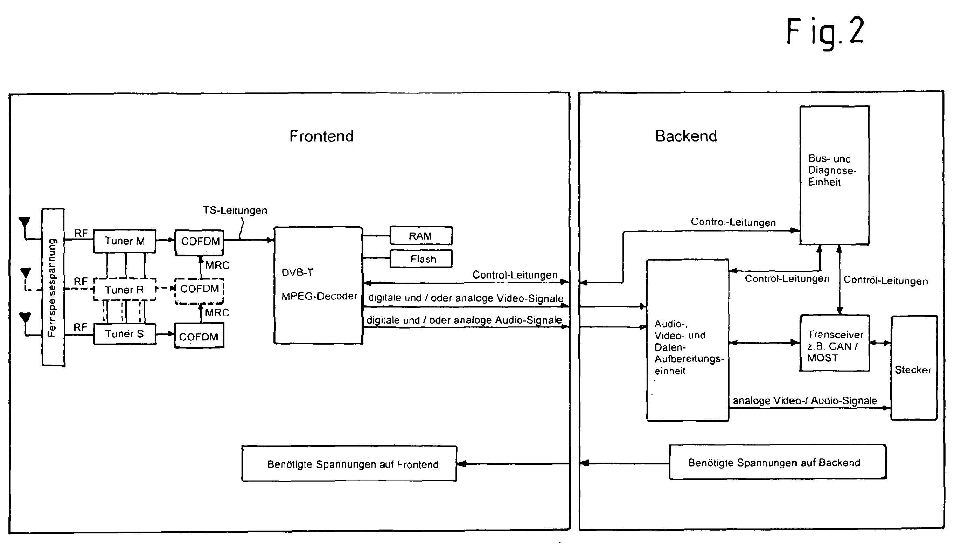

Die Figur 2 zeigt nochmals das exakt gleiche Backend mit einem Frontend für den digitalen terrestrischen Standard DVB-T. Weitere Blockschaltbilder für andere TV-Standards sind damit leicht vorstellbar. Ebenfalls leicht vorstellbar ist damit der Einsatz in einem spezifischen Fahrzeug eines Automobilherstellers in verschiedenen Ländern der Welt mit verschiedensten Empfangsstandards.

Die Leiterplatten mit den elektrischen und elektronischen Bauteilen zur Realisierung der Funktion der jeweiligen Einheit sind entweder gemeinsam in einem Gehäuse an einem einzigen Einbauort in dem Fahrzeug angeordnet oder können alternativ in eigenen Gehäusen am gleichen Einbauort oder an voneinander verschiedenen Einbauorten angeordnet sein. Sind Frontend und Backend an unterschiedlichen Einbauorten angeordnet, erfolgt die Übertragung der Signale bzw. der Stromversorgung über zumindest ein entsprechend hierfür geeignetes Kabel, wobei es von besonderem Vorteil ist, wenn das Frontend in räumlicher Nähe zu der zumindest einen Antenne angeordnet ist, während das Backend zum Beispiel am Einbauort eines zentralen Steuergerätes des Fahrzeuges angeordnet ist. Damit ist es beispielsweise zusätzlich noch denkbar, dass Backend in das zentrale Steuergerät oder in eines von mehreren Steuergeräten des Fahrzeuges zu integrieren.

Zusammenfassend bietet die vorliegende Erfindung also den Vorteil, dass diejenigen Mittel, die für den Empfang und die Verarbeitung der hochfrequenten Signale, über die landesspezifische Dienste abgestrahlt und empfangen werden, in einer ersten Einheit, nämlich der Empfangseinheit (Frontend) zusammenzufassen. Die zweite Einheit, die zur Signalaufbereitung und zur Kommunikation mit einem Kommunikationsbus des Fahrzeuges erforderlich ist, ist davon funktional und räumlich getrennt voneinander angeordnet. Dadurch wird es ermöglicht, dass bei Änderungen im Empfang der landesspezifischen Dienste das Frontend entweder zum Beispiel durch ein Softwareupdate angepasst oder komplett ausgetauscht werden kann, ohne dass davon das Backend betroffen ist. Sollen hingegen die gleichen landesspezifischen Dienste empfangen und verarbeitet werden, die gesamte Empfangseinrichtung aber in einem neuen Fahrzeug mit neuer Kommunikationsstruktur eingebaut werden, reicht es aus, das Backend entsprechend an die neue Kommunikationsstruktur (Topologie des Kommunikationsbusses des Fahrzeuges) anzupassen, ohne Änderungen im Frontend vornehmen zu müssen.

Abschließend sei der Vollständigkeit halber noch erwähnt, dass die von der zumindest einen Antenne, insbesondere mehreren Antennen, empfangenen hochfrequenten Signale mit den landesspezifischen Diensten über einen oder mehrere Empfangszüge in der Empfangseinheit empfangen und verarbeitet werden und in der Kommunikationseinheit von der dort vorhandenen zumindest einen Aufbereitungseinheit aufbereitet werden, um dann über die Schnittstelle des Kommunikationsbusses an entsprechende weiterverarbeitende Geräte im Fahrzeug abgegeben werden. Hierbei handelt es sich dann um Geräte, die zum Beispiel Rundfunkprogramme wiedergeben, Fernsehprogramme anzeigen oder einen Datenaustausch ermöglichen. In einem solchen Fall ist es darüber hinaus denkbar, dass der Empfangszug der Empfangseinrichtung nicht nur in eine Richtung genutzt wird (von der Antenne in Richtung des Kommunikationsbusses des Fahrzeuges), sondern auch umgekehrt. Das bedeutet, dass mit der vorliegenden Empfangseinrichtung nicht nur Signale empfangen, sondern auch abgestrahlt werden können.

## Patentansprüche

1. Empfangseinrichtung zum mobilen Empfang von hochfrequenten Signalen verschiedener Dienste in Fahrzeugen, **dadurch gekennzeichnet, dass** die Empfangseinrichtung zumindest eine Empfangseinheit (frontend) zum Empfangen und Verarbeiten landesspezifischer Dienste sowie eine Kommunikationseinheit (backend) zum Anschluss der Empfangseinrichtung an einen Kommunikationsbus des Fahrzeuges aufweist, wobei die Empfangseinheit und die Kommunikationseinheit zur Signalübertragung miteinander verbunden sind und unabhängig voneinander austauschbar sind.

2. Empfangseinrichtung nach Anspruch 1, **dadurch gekennzeichnet, dass** die zumindest eine Empfangseinheit zum Empfangen und Verarbeiten von zumindest einem Dienst, der über analoge oder digitale hochfrequente Signale abgestrahlt und empfangen wird, ausgebildet ist, und hierzu zumindest eine Antenne, zumindest einen Tuner sowie zumindest einen Decoder zum Verarbeiten der empfangenen Signale aufweist.

3. Empfangseinrichtung nach Anspruch 1, **dadurch gekennzeichnet, dass** die Kommunikationseinheit Mittel aufweist und diese Mittel dazu ausgebildet sind, die Topologie der Kommunikationseinheit an die Topologie des Kommunikationsbusses des Fahrzeuges durch eine Hardware- und/oder Softwareänderung anzupassen.

4. Empfangseinrichtung nach einem der vorhergehenden Ansprüche, **dadurch gekennzeichnet, dass** die Empfangseinheit und die Kommunikationseinheit physikalisch voneinander getrennt sind und die elektrischen und elektronischen Bauteile zur Realisierung der Funktion der jeweiligen Einheit auf einer eigenen Leiterplatte angeordnet sind und Schnittstellen vorhanden sind, um die Empfangseinheit und die Kommunikationseinheit untereinander und die Kommunikationseinheit mit dem Kommunikationsbus des Fahrzeuges zu verbinden.

5. Empfangseinrichtung nach einem der vorhergehenden Ansprüche, **dadurch gekennzeichnet, dass** die Kommunikationseinheit oder die Empfangseinheit ein Netzteil zur eigenen Stromversorgung und zur Stromversorgung der Empfangseinheit oder der Kommunikationseinheit aufweist.

6. Empfangseinrichtung nach einem der vorhergehenden Ansprüche, **dadurch gekennzeichnet, dass** die Kommunikationseinheit zumindest eine Aufbereitungseinheit für Audio-, Video- und/oder Datensignale aufweist.

7. Empfangseinrichtung nach einem der vorhergehenden Ansprüche, **dadurch gekennzeichnet, dass** die Kommunikationseinheit zumindest eine Diagnoseeinheit zur Überprüfung der Funktion der zumindest einen Empfangseinheit und/oder der Funktion des Kommunikationsbusses des Fahrzeuges aufweist.

8. Empfangseinrichtung nach einem der vorhergehenden Ansprüche, **dadurch gekennzeichnet, dass** die Verbindung zwischen der Kommunikationseinheit und dem Kommunikationsbus des Fahrzeuges dazu ausgebildet ist, ein Softwareupdate ausgehend von einem zentralen Steuergerät des Fahrzeuges durchzuführen.

9. Empfangseinrichtung nach einem der vorhergehenden Ansprüche, **dadurch gekennzeichnet, dass** die Kommunikationseinheit eine separate Schnittstelle hat, an die ein Steuergerät zur Durchführung eines Softwareupdates anschließbar ist.

## Claims

1. Reception device for mobile reception of radio-frequency signals from various services in vehicles, **characterized in that** the reception device has at least one reception unit (frontend) for receiving and processing country-specific services and a communication unit (backend) for connecting the reception device to a communication bus of the vehicle, wherein the reception unit and the communication unit are connected to one another for signal transmission and are replaceable independently of one another.

2. Reception device according to Claim 1, **characterized in that** the at least one reception unit is designed to receive and process at least one service that is broadcast and received using analogue or digital radio-frequency signals, and to this end has at least one antenna, at least one tuner and at least one decoder for processing the received signals.

3. Reception device according to Claim 1, **characterized in that** the communication unit has means and these means are designed to match the topology of the communication unit to the topology of the communication bus of the vehicle by means of a hardware and/or software change.

4. Reception device according to one of the preceding claims, **characterized in that** the reception unit and the communication unit are physically separate from one another and the electrical and electronic components for performing the function of the respective unit are arranged on a dedicated printed circuit board, and interfaces are present in order to connect the reception unit and the communication unit to one another and the communication unit to the communication bus of the vehicle.

5. Reception device according to one of the preceding claims, **characterized in that** the communication unit or the reception unit has a power supply unit for its own supply of power and for supplying power to the reception unit or the communication unit.

6. Reception device according to one of the preceding claims, **characterized in that** the communication unit has at least one conditioning unit for audio, video and/or data signals.

7. Reception device according to one of the preceding claims, **characterized in that** the communication unit has at least one diagnosis unit for checking the operation of the at least one reception unit and/or the operation of the communication bus of the vehicle.

8. Reception device according to one of the preceding claims, **characterized in that** the connection between the communication unit and the communication bus of the vehicle is designed to perform a software update from a central controller of the vehicle.

9. Reception device according to one of the preceding claims, **characterized in that** the communication unit has a separate interface to which a controller for performing a software update is connectable.

## Revendications

1. Dispositif récepteur pour la réception mobile de signaux à haute fréquence de différents services dans des véhicules à moteur, **caractérisé en ce que** le dispositif récepteur comporte au moins une unité de réception (frontal) destinée à recevoir et à traiter des services spécifiques d'un pays ainsi qu'une unité de communication (serveur) destinée à raccorder le dispositif de réception à un bus de communication du véhicule à moteur, dans lequel l'unité de réception et l'unité de communication sont connectées l'une à l'autre pour la transmission de signaux et peuvent être échangées indépendamment l'une de l'autre.

2. Dispositif récepteur selon la revendication 1, **caractérisé en ce que** l'au moins une unité de réception est conçue pour recevoir et traiter au moins un service qui est émis et reçu par l'intermédiaire de signaux à haute fréquence analogiques ou numériques et comporte à cet effet a moins une antenne, au moins un syntoniseur ainsi qu'au moins un décodeur pour traiter les signaux reçus.

3. Dispositif récepteur selon la revendication 1, **caractérisé en ce que** l'unité de communication comporte des moyens et **en ce que** lesdits moyens sont conçus pour adapter la topologie de l'unité de communication à la topologie du bus de communication du véhicule à moteur par une modification matérielle et/ou logicielle.

4. Dispositif récepteur selon l'une quelconque des revendications précédentes, **caractérisé en ce que** l'unité de réception et l'unité de communication sont physiquement séparées l'une de l'autre et **en ce que** les composants électriques et électroniques destinés à mettre en ouvre la fonction de l'unité respective sont disposés sur une carte de circuit imprimé propre et **en ce que** des interfaces sont présentes pour connecter l'unité de réception et l'unité de communication l'une à l'autre et l'unité de communication au bus de communication du véhicule à moteur.

5. Dispositif récepteur selon l'une quelconque des revendications précédentes, **caractérisé en ce que** l'unité de communication ou l'unité de réception comportent une alimentation électrique destinée à sa propre alimentation en courant et à l'alimentation en courant de l'unité de réception ou de l'unité de communication.

6. Dispositif récepteur selon l'une quelconque des revendications précédentes, **caractérisé en ce que** l'unité de communication comporte au moins une unité de traitement destinée à des signaux audio, vidéo et/ou de données.

7. Dispositif récepteur selon l'une quelconque des revendications précédentes, **caractérisé en ce que** l'unité de communication comporte au moins une unité de diagnostic destinée à vérifier la fonction de ladite au moins une unité de réception et/ou la fonction du bus de communication du véhicule à moteur.

8. Dispositif récepteur selon l'une quelconque des revendications précédentes, **caractérisé en ce que** la connexion entre l'unité de communication et le bus de communication du véhicule à moteur est conçue pour effectuer une mise à jour logicielle à partir d'un appareil de commande central du véhicule à moteur.

9. Dispositif récepteur selon l'une quelconque des revendications précédentes, **caractérisé en ce que** l'unité de communication comporte une interface séparée à laquelle peut être raccordé un appareil de commande pour effectuer une mise à jour logicielle.
